# EUROPEAN PATENT APPLICATION

(11) **EP 1 164 499 A1**
(43) Date of publication of application: **19.12.2001**
(21) Application number: 00401354.6
(22) Date of filing: 17.05.2000
(51) Int. Cl.: G06F 17/30

(54) **Manipulation of data encoded in a mark-up language**

(71) Applicant: Canal+ Technologies Société Anonyme, 75516 Paris Cedex 15 (FR)
(72) Inventor: Villers, Jean - Stéphane, 95800 Cergy (FR)
(74) Representative: Cozens, Paul Dennis

(57) **Abstract**

There is disclosed a method and a system for rendering a page encoded in a mark-up language source. Many particular embodiments relate to rendering documents encoded in Hypertext mark-up language ("HTML"). The method comprises a translating step in which the mark-up language source is translated into data in an intermediate format and a display step in which a display rendering the page is generated. The intermediate language data preferably includes all information needed to generate the display in the display step, such that the mark-up language source need not be referred to in the display step. The intermediate language data is preferably binary format data.

## Description

The present invention relates, in its various aspects, to manipulation of computer documents encoded in a mark-up language. In this context, "manipulation" may particularly, but not exclusively, refer to distribution, storage and rendering of such documents. Moreover, the invention has particular, but not exclusive, application to manipulation of documents encoded in hypertext mark-up language ("HTML").

Mark-up languages in general, and HTML in particular, are being used increasingly to encode documents intended for display on a computer screen. By far the most extensive use is made of HTML in encoding pages published on the World Wide Web. However, other applications include encoding of word processor documents, controlling the appearance of graphical user interface displays and encoding of pages of information to be displayed in other arbitrary circumstances. One application of particular interest to the present applicant is use of HTML or other mark-up languages to encode pages of information intended for transmission as part of a digital television signal. Such pages are rendered by a digital television receiver/decoder for display on a television screen.

The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

As used herein, the term "digital television system" includes for example any satellite, terrestrial, cable and other system and, as used herein, the term "digital transmission system" includes any transmission system for transmitting or broadcasting for example primarily audiovisual or multimedia digital data. Whilst the present invention is particularly applicable to a broadcast digital television system, the invention may also be applicable to a fixed telecommunications network for multimedia internet applications, to a closed circuit television, and so on.

For convenience only, and not to imply any limitation to the content of the information to which the present invention relates, the basic unit of information encoded in a mark-up language will be referred to herein as a "page". Similarly, for convenience only, and not to imply any limitation to the structure of such software, the software responsible for rendering pages will be referred to herein as a "rendering engine".

It is recognised that proper rendering of a page, especially where the page has a large graphical content, is an activity that makes a heavy demand on the processing and memory capability of the hardware platform on which a rendering engine is running. Moreover, it is recognised that the text form in which mark-up language is expressed is not efficient in terms of its size in bytes (although this form does have other advantages).

An aim of this invention, at least in preferred embodiments, is to provide systems that may facilitate rendering of pages by hardware with limited memory and/or processing capacity, and may, in certain embodiments, reduce the size of the data that must be transmitted to hardware on which a page is to be displayed.

In a first aspect, the invention provides a method of rendering data encoded in a mark-up language source comprising translating the mark-up language source into object format data and rendering a display of the object format data.

As explained above, the source data is normally termed a "page" and this term is used herein for convenience but this is not intended to imply any limitation on the format of the data. In addition, the whole "page" need not be displayed in the rendering step.

In a similar aspect, the invention provides a method for rendering a page encoded in a mark-up language source comprising a translating step in which the mark-up language source is translated into data in an intermediate (object) format and a display step in which a display is generated, which display is a rendering of the page. The intermediate format can be optimised to suit the purposes of a particular application. For example, it may be optimised for low memory requirements, speed of rendering, or for other requirements.

The object format is preferably stored in memory so that the page may be displayed based on this "compiled" version of the page rather than by interpreting the mark-up language source.

Advantageously, the object format data may be binary encoded data. This can be advantageous both in terms of speed of rendering and memory requirement. The object format may correspond to a series of data structures, each data structure corresponding to a graphical object. The data structures may correspond to data structures of a programming language such as C.

In preferred embodiments, object format data relating to each graphical object of the page is represented in an object data structure, wherein each object data structure contains data sufficient to display the corresponding graphical object without reference to other object data structures. In a preferred form of such embodiments, during the display step some or all object data structures, other than the one being at a given time displayed, may advantageously be consigned to a subsidiary store, such as a paging file. This minimises the use of main memory of an execution platform carrying out the method.

In a preferred method embodying the invention, in which the mark-up language source is encoded in accordance with a coding specification, object format data is generated only in respect of source code that is in accordance with the specification. This ensures that the object data contains little or no data that is not strictly necessary for proper rendering in the display step, thereby minimising the size in memory of the object data.

As will be appreciated, the object data contains all of the information required to render the page. No reference need be made to the mark-up language source during the display stage. Thus, from a second aspect, the invention provides a method for rendering a page encoded in a mark-up language source comprising a translating step in which the mark-up language source is translated into data in an object format, and a display step in which a display is generated without reference to the mark-up language source, which display is a rendering of the page.

More specifically, in a further aspect, the invention may provide a method of rendering a page encoded in a mark-up language source, preferably according to the first or second aspect of the invention, as executed on a rendering platform, in which method mark-up language code is removed from memory of the rendering platform following conversion to an object format. The term rendering platform is intended to encompass any apparatus capable of providing a display corresponding to the mark-up language source.

In order to render a piece of code expressed in a mark-up language as part of an encoded page, it is typically necessary to have knowledge of all code in the encoded page preceding the object in question. A consequence of this is that at each stage in displaying a page, a conventional rendering engine must consider a large amount of data relating to objects previously displayed.

Therefore, from a third aspect the invention proposes a method of displaying a page encoded in a mark-up language comprising a translating step in which the mark-up language is translated into an object format, in which method object format data relating to each graphical object of the page is represented in an object data structure, wherein each object data structure contains data sufficient to display the corresponding graphical object without reference to other object data structures.

Thus, as a page is displayed, the rendering engine need refer to just one object data structure at any one time. This can contribute to saving of memory, for example, by consigning some or all object data structures (other that the one being processed at a given time) to a subsidiary store, such as a paging file. Of course, the position of the object may be dependent on the position of other objects, but once the desired position is provided, reference to other objects is not necessary.

In order to reduce further the amount of memory required to render a page, the invention proposes, in most general terms, that in a method of rendering a page encoded in a mark-up language as executed on a rendering platform, mark-up language code is removed from memory of the rendering platform following conversion to an object format.

For example, in embodiments of the first aspect of the invention, subsequent to the translating step, the mark-up language may be discarded from memory. Similarly, in embodiments of the second aspect of the invention, the mark-up language may be discarded from memory after creation of the object data structures.

In preferred embodiments, the object data is a binary representation of the mark-up language source. As such, its format may be independent of the display on which it is to be rendered to the same extent as the mark-up language source. For example, the object data may include a plurality of binary objects at least some of which correspond to a tag in the mark-up language source.

Advantageously, the object data is translated into a second object format prior to the display step. The second object format may contain data relating to rendering a graphical object on a specific display. In particular, the second object format contains data relating to the position and/or the size of a graphical object on a display. The second object format data may also include binary representations of ancillary objects, for example of images.

As has been discussed above, the object data format may be chosen such that its size is less than that of the mark-up language source. Therefore, from another aspect, the invention provides a method of distributing a page encoded in a mark-up language source comprising converting the page source into data in an object format, storing the object format at a data repository or server, distributing the object format data from the server to a remote location over a data link, and displaying a representation of the page at the remote location. This method may consume less bandwidth in the data link than would be the case if the mark-up language source were distributed.

In embodiments of this aspect of the invention, the data link may include, for example, a local area network, the Internet, or a data signal encoded in a digital television signal.

The server may, for example, be a web server or a web proxy. The remote location may include a rendering engine running on a receiver/decoder for digital television signals.

Methods embodying the invention have particular, but by no means exclusive, application to displaying pages encoded in hypertext mark-up language ("HTML"). Particular advantages result when the source language has one or more of the following properties:- (a) formatting instructions as text or control characters; (b) formatting instructions which can be combined with spaced apart instructions; (c) instructions which turn on or off a feature.

A particular embodiment of the invention resides in a method of distributing a page encoded in a mark-up language source on a remote client comprising retrieving the page source from a server, converting the page source into data in an object format and storing the object format data at a net proxy, distributing the object format data from the net proxy to a remote location over a data link, and displaying a representation of the page at the remote location.

In both of the above mentioned aspects of distributing data, the object format data which is stored at a data repository, server or net proxy may be in a first object format translated from the mark-up language source or in a second object format further translated from the first object format. Exclusively the first format or the second format may be stored at a particular store or a mixture of formats may be stored.

Whilst translation and display may be separate steps, particularly if the object format data is stored at an intermediate point, often the translation will be done "on-the-fly". That is, translation into object format data may begin while the mark-up language source is being received in a data stream. Furthermore, translation of data in a first object format into a second object format may begin while the first translation step is occuring. Thus, the method may be used in a situation wherein the mark-up language source is received as a data stream and wherein a portion of the source data is translated or converted into object format data while further source data is being received. The mark- up language source and the object format data (in first and/or second object format) may be stored in a cache memory.

The invention may provide a method of managing memory in a receiver/decoder comprising allocating first memory for received mark-up language source code data and allocating second memory for object format data translated from the mark-up language source, wherein mark-up language source code data is deleted from said first memory following translation. Preferably, both the first and second memory comprise cache memory located in RAM.

A common element of a page encoded in a mark-up language is a hyperlink. A hyperlink contains a reference to another page (or an anchor of the same page). When a user activates a hyperlink, the page (or the part of the page) to which the hyperlink refers is displayed. In a mark-up language, the reference typically includes a URL, which may contain text that identifies a page on a remote file or on a local file system. Therefore, on activation of the hyperlink, the system must resolve the URL, determine the location of the object and, take whatever steps are necessary to retrieve it for display.

Preferably, a resource locator is provided for resolving URLs. Specifically, the resource locator may attempt to retrieve a desired object in a format which is appropriate to the client requesting the object. This may entail attempting to retrieve an object in object data format, if object data is available. If not, the resource locator may retrieve data in source format to be translated. In a further aspect, the invention may provide a method of providing object format data in response to activation of a hyperlink comprising checking whether translated object format data corresponding to the hyperlink is stored and, if so, providing said corresponding object format data or, if not, translating source format data corresponding to the hyperlink.

Thus, in operation of the resource locator in conjunction with the earlier described aspects, if the data to be displayed includes a hyperlink that refers to further data, if available, the further data is supplied as previously translated object format data in response to activation of the hyperlink.

In an alternative method embodying the invention, where a page to be displayed includes a hyperlink that refers to a second page, both of the said pages have been translated into an object format, and the object format data is stored in memory, the reference in the hyperlink may include a pointer to the location in memory of the second page. This allows the rendering platform to access a referenced page with reference to the pointer, with a minimum of processing overhead.

The pointer may be a pointer to an absolute location in the memory of a rendering platform. Alternatively, the pointer may be a relative value indicating an offset to the location in memory of the second page. An advantage of this latter alternative is that the coherency of the object format data does not depend upon its being located at a particular location in memory.

This aspect of the invention has particular application to a frame page. A frame page encoded in a mark-up language (for example in, hypertext mark-up language) may include a frame within which several windows are defined, within each of which window another page is displayed. An event (such as a user clicking a mouse over a hyperlink) in one such window can cause the content of that window or another of the windows to change. Conventionally, each window refers to the page displayed within it by a resource locator such as a file name or a URL.

In certain implementations, the invention may provide a frame page encoded in object format data translated from a mark-up language source comprising code to define a frameset, which code includes a reference to a page to be displayed in a frame of the frameset, in which the reference comprises a hyperlink which may reference object format data or mark-up language source. Thus, the translated frame page may make use of either source or object format data as provided by the resource locator. In other embodiments, a reference in a window of a frame page comprises a pointer to memory containing object data representing the widow referred to.

More specifically, the invention provides a frame page encoded in object data translated from a mark-up language source comprising code to define a frameset, which code includes a reference to a page to be displayed in a frame of the frameset, in which the reference includes a pointer expressed as a memory location relative to the frame page data.

This is advantageous in situations in which the absolute location in memory of the frame page object format data and the pages to which it refers is likely to change. It may also provide a more convenient structure for maintaining a history of a user's navigation in a frameset.

This aspect of the invention also provides a frameset including a frame page encoded in object format data stored in memory translated from a mark-up language source comprising code to define a layout of the frameset, which code includes a reference to a plurality of pages to be displayed in a frame of the frameset, in which a first of the pages to be displayed includes a reference to another of the pages to be displayed, which reference includes a pointer to memory expressed as an offset in memory.

An execution environment typically includes a memory management system from which an application (such as a rendering engine) can request memory for its own use. The application should subsequently free the memory once it is no longer required. Typically, the execution platform allocates memory in blocks of several bytes to provide the application with at least the number of bytes it has requested. This will, in many cases, result in more memory being allocated than is actually required. If memory allocation requests of an arbitrary size are made, then on average a number of bytes equal to half the block size will be wasted for each allocation. Moreover, as is widely recognised, repeated allocation and de-allocation of memory from a memory pool eventually gives rise to free space becoming fragmented so that free memory exists in a large number of small blocks. This can result in a request for a block of memory being denied even when the total amount of unallocated memory is substantially greater than the block being requested.

Therefore, in a preferred embodiment of the invention, a block of HTML source code is analysed and, prior to conversion to the object format, the size in memory of the object format data is estimated, and the rendering engine requests that amount of memory. This means that just one memory allocation request is made for each block, so minimising the amount of memory wasted and reducing the likelihood of fragmentation occurring.

This memory allocation feature may be provided independently,in a further aspect which provides a method of allocating memory in a device in which memory is allocated in blocks, preferably in a receiver/decoder, the method comprising estimating or determining a total amount of memory for a plurality of objects to be received, preferably components of a graphical display; allocating a single block of memory of sufficient size to contain the plurality of objects; and subsequently storing the objects in the allocated block.

From another aspect, the invention provides a receiver/decoder for digital television signals, preferably including an execution platform and a rendering engine operative to render a page encoded in a mark-up language (e.g. HTML), arranged to perform a method according to any one of the above aspects of the invention.

In an apparatus aspect, the invention provides apparatus for rendering data encoded in a mark-up language source comprising means for translating the mark-up language source into object format data (for example a translator or compiler) and means for rendering a display of the object format data (for example a rendering engine).

In a further apparatus aspect, the invention provides apparatus for rendering a page encoded in a mark-up language source comprising means for translating the mark-up language source into data in an intermediate (object) format and display generating means for generating a display which is a rendering of the page.

When embodied in a device such as a receiver/decoder, the display may be generated internally, for example as an image stored in memory but the means for converting this to a visible display (for example a television or other display screen) may not be part of the apparatus and references to generating a display are intended to encompass generating a displayable image whether or not the image is made visible.

In a further apparatus aspect, the invention provides apparatus for rendering a page encoded in a mark-up language source, preferably according to the first or second aspect of the invention, including memory for storing the mark-up language source code and arranged to remove mark-up language code from the memory following conversion to an object format.

In a further apparatus aspect, the invention provides apparatus for displaying a page encoded in a mark-up language comprising a translating step in which the mark-up language is translated into an object format, in which method object format data relating to each graphical object of the page is represented in an object data structure, wherein each object data structure contains data sufficient to display the corresponding graphical object without reference to other object data structures.

In a further apparatus aspect, the invention provides apparatus for distributing a page encoded in a mark-up language source on a remote client comprising means for retrieving the page source from a server, means for converting the page source into data in an object format and storing the object format data at a net proxy, means for distributing the object format data from the net proxy to a remote location over a data link, and means for displaying a representation of the page at the remote location.

In a further apparatus aspect, the invention provides apparatus for distributing a page encoded in a mark-up language source comprising means for converting the page source into data in an object format, storing the object format at a data repository or server, distributing the object format data from the server to a remote location over a data link, and displaying a representation of the page at the remote location.

In a further apparatus aspect, the invention provides apparatus for allocating memory in a device in which memory is allocated in blocks, preferably in a receiver/decoder, the apparatus comprising means for estimating or determining a total amount of memory for a plurality of objects to be received, preferably components of a graphical display; means for allocating a single block of memory of sufficient size to contain the plurality of objects; and means for subsequently storing the objects in the allocated block.

The invention extends to a computer program product or computer-readable medium having instructions for carrying out any one of the methods mentioned above.

The invention further provides apparatus, particularly a receiver/decoder, or a method substantially as any one herein described or as illustrated in or with reference to the accompanying drawings or any one of the accompanying drawings.

An embodiment of the invention will now be described in detail, and with reference to the accompanying drawings, in which:
Figure 1 shows an overview of a typical digital television system;
Figure 2 is a block diagram of a receiver/decoder;
Figure 3 shows the architecture of a receiver/decoder;
Figure 4 is a simple flow diagram illustrating a method embodying the invention of rendering a page encoded in hypertext mark-up language; and
Figure 5 is a diagram illustrating the relationship between pages in a frameset.

This example relates to a system for rendering pages encoded in HTML on a rendering platform that is embodied within a receiver/decoder for a digital television signals. Such a platform may receive HTML code as byte stream from a directly connected source, such as a modem, or HTML code may be broadcast as part of a digital television signal. The platform includes a processor capable of executing software programs, including a rendering engine. A preferred platform is a receiver/decoder for a digital television system. This will be briefly described by way of background.

### Overview of a digital television system

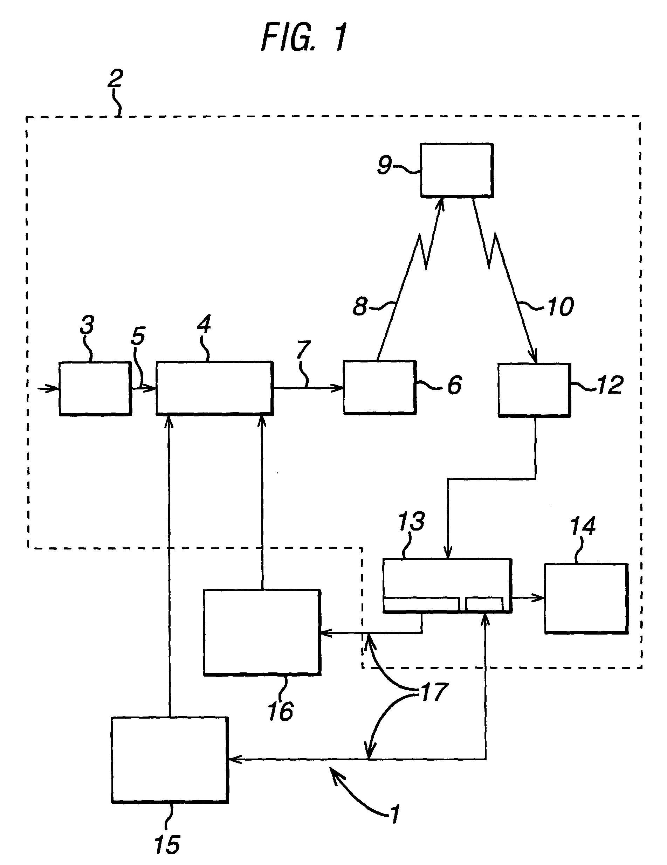

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the receiver/decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the receiver/decoder 13 and smartcard, the end user may purchase commercial offers in either a subscription mode or a pay-per-view mode.

An interactive system 16, also connected to the multiplexer 4 and the receiver/decoder 13 and again located partly in the broadcast centre and partly in the receiver/decoder, enables the end user to interact with various applications via a modemmed back channel 17. The modemmed back channel may also be used for communications used in the conditional access system 15.

### Receiver/decoder

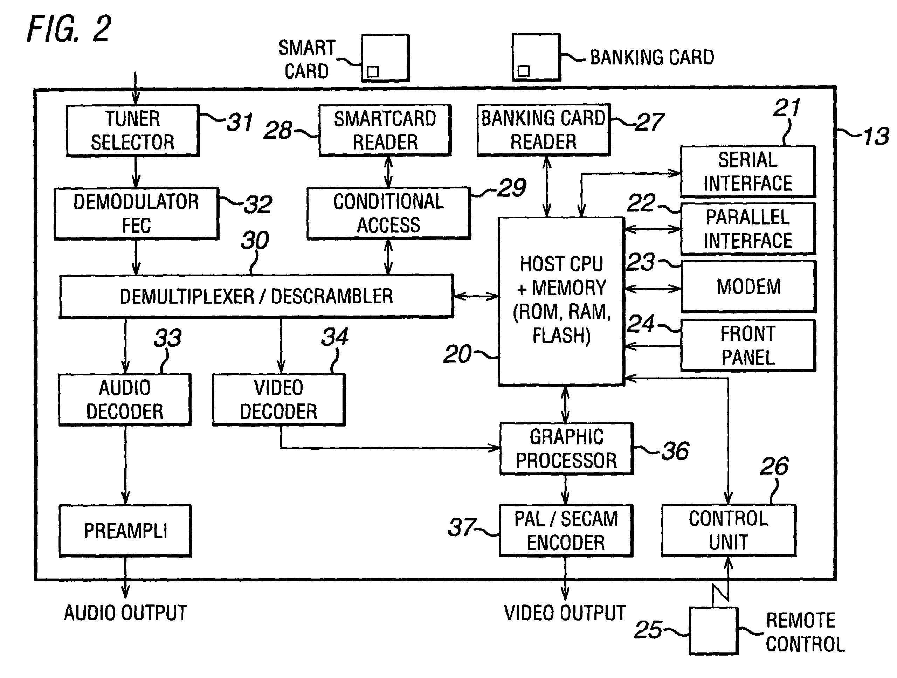

Referring to Figure 2, the various elements of receiver/decoder 13 will now be described in terms of functional blocks.

The receiver/decoder 13, which may be, for example, a digital set-top box (DSTB), comprises a central processor 220 including associated memory elements and adapted to receive input data from a serial interface 221, a parallel interface 222, a modem 223 (connected to the modem back channel 17 of Fig. 1), and switch contacts 224 on the front panel of the decoder.

The receiver/decoder is additionally adapted to receive inputs from an infra-red remote control 225 via a control unit 226 and also possesses two smartcard readers 227, 228 adapted to read bank and subscription smartcards 242, 240 respectively. The subscription smartcard reader 228 engages with an inserted subscription card 240 and with a conditional access unit 229 to supply the necessary control word to a demultiplexer/descrambler 230 to enable the encrypted broadcast signal to be descrambled. The decoder also includes a conventional tuner 231 and demodulator 232 to receive and demodulate the satellite transmission before being filtered and demultiplexed by the unit 230.

As used in this description, an application is preferably a piece of computer code for controlling high level functions of preferably the receiver/decoder 13. For example, when the end user positions the focus of remote control 225 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

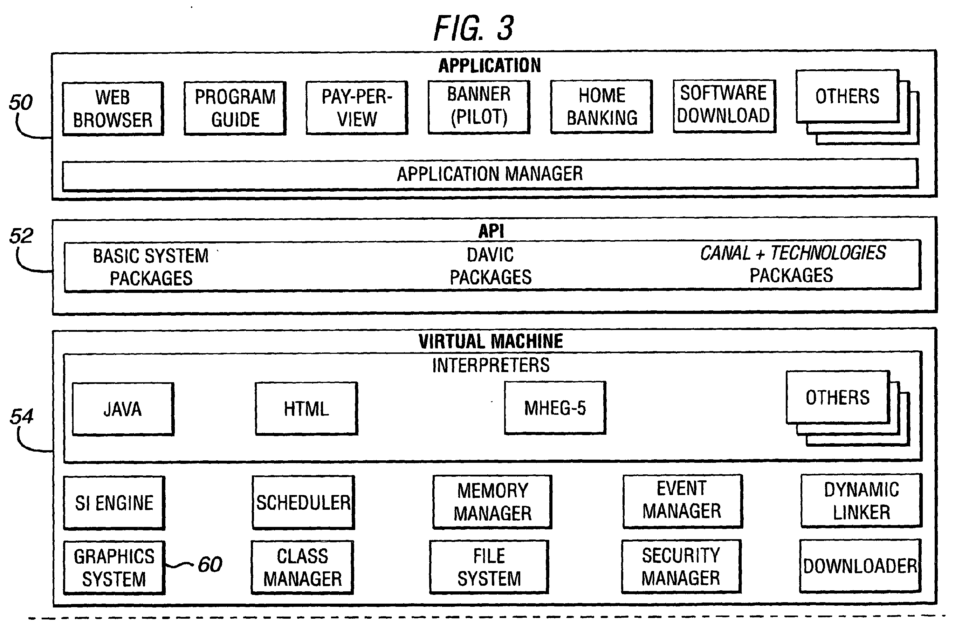

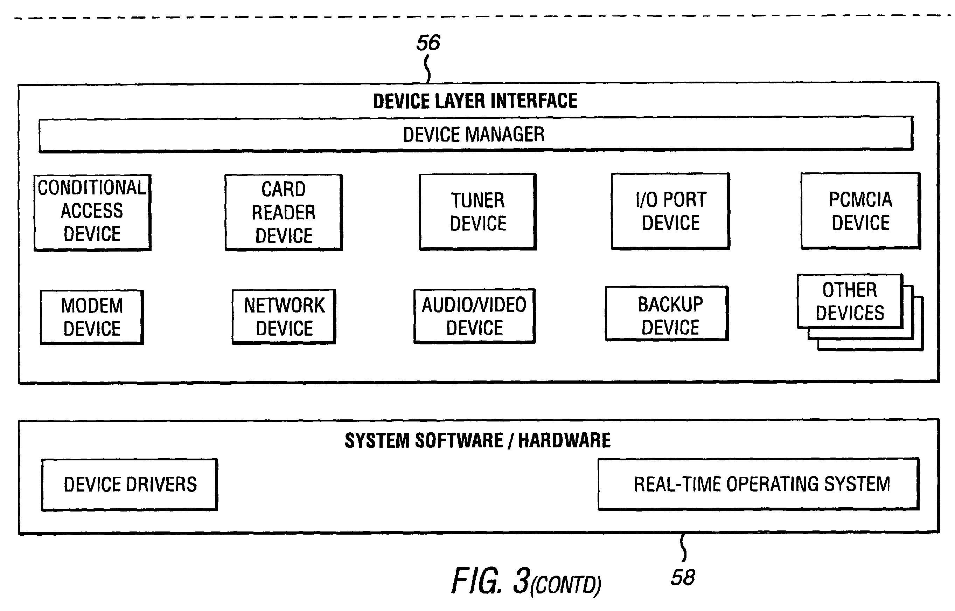

The receiver/decoder contains five software layers, organized so that the software can be implemented in any receiver/decoder and with any operating system. Referring to Figure 3, the various software layers are Application Layer 250, Application Programming Interface (API) layer 252, Virtual Machine Layer 254, Device Layer 256 and System Software/Hardware Layer 258.

The Application Layer 250 encompasses applications that are either resident in or downloaded to the receiver/decoder. They may be interactive applications used by customers, written in, for example, Java, HTML, MHEG-5 or other languages, or they may be applications used by the receiver/decoder to run such applications. This layer is based on a set of open Application Programming Interfaces (APIs) provided by the Virtual Machine layer. This system allows applications to be downloaded to flash or RAM memory in the receiver/decoder on-the-fly or on demand. The application code can be transmitted in compressed or uncompressed format using protocols such as Data Storage Media Command and Control (DSMCC), Network File Server (NFS) or other protocols.

Interactive applications are applications that the user interacts with, for example, to obtain products and services, such as electronic program guides, telebanking applications and games. The following resident applications are used to manage interactive applications:
- Boot. The Boot application 260 is the first application launched when the receiver/decoder is powered on. The Boot application starts the different "Managers" in the Virtual Machine, the first being the Application Manager 262.
- Application Manager. The Application Manager 262 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 264 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 268 is used to change channels using the Program-up, Program-down and numeric keys. When another form of zapping is used, for example, through a banner (pilot) application, the Zapping application is stopped.
- Callback. The Callback application is used to extract the values of various parameters stored in the receiver/decoder memory and return these values to the commercial operator via modemmed back channel 17, or by other means.

The API layer 252 provides high-level utilities for interactive application development. It includes several packages that make up this high-level API. The packages provide all the functionality necessary to run interactive applications. The packages are accessible by the applications.

In a preferred embodiment the API is adapted to run applications written in the Java programming language. Furthermore, it can interpret HTML and other formats, such as MHEG-5. Besides these interpreters, it also includes other packages and service modules that are detachable and extensible as requirements dictate.

The Virtual Machine layer 254 is composed of language interpreters and various modules and systems. It consists of everything necessary to receive and execute interactive applications in the receiver/decoder.

The Device Interface layer 256 includes a Device Manager and devices. Devices are software modules which consist of the logical resources necessary for management of external events and physical interfaces. The Device Layer manages communication channels between drivers and applications and provides enhanced error exception checking. Some examples of managed devices are: card readers, modems, network, PCMCIA (Personal Computer Memory Card International Association), LED display and so on. Programmers do not have to deal with this layer directly, since the API layer controls the devices from above.

The System Software/Hardware layer 258 is provided by the manufacturer of the receiver/decoder. Because of the modularity of the system and because services supplied by the OS (such as event scheduling and memory management) are part of the Virtual Machine, the higher layers are not tied to a particular real-time operating system (RTOS) or to a particular processor.

The receiver/decoder may include an application for displaying web pages, for example received over the modem connection or from a digital satellite. Web pages are typically encoded in a mark up language such as HTML and the interpretation and rendering of HTML pages will now be described.

### Background information relating to HTML rendering

As has previously been mentioned, in order to render a piece of HTML code correctly, it may be necessary to know the entire content of the HTML page that precedes the piece in question. Instructions for layout and style of the page are defined in so-called "tags" which are distributed throughout the entirety of the HTML code. In many cases, rendering of HTML code enclosed between an opening tag and a closing tag will modify a region of the displayed page. Some instructions to change the style of rendered text can be specified indefinitely, while others must normally have a closing tag to terminate application of the style imposed by the opening tag.

Consider the following simple example of a HTML source fragment:
<I> Italic text starts here <B> and changes into bold-italic </B></I> and then continues as normal.

When rendered, this is displayed as:
*Italic text starts here **and changes into bold-italic*** and then continues as normal.

In order to display the text "and changes into bold-italic" it is necessary to know not only that the text is to be bold as a result of the tag <B>, but also that it should be in italic as a result of the earlier applied tag <I>. In practice, the earlier-applied tag could be at any arbitrary point earlier in the page.

### HTML rendering in this embodiment

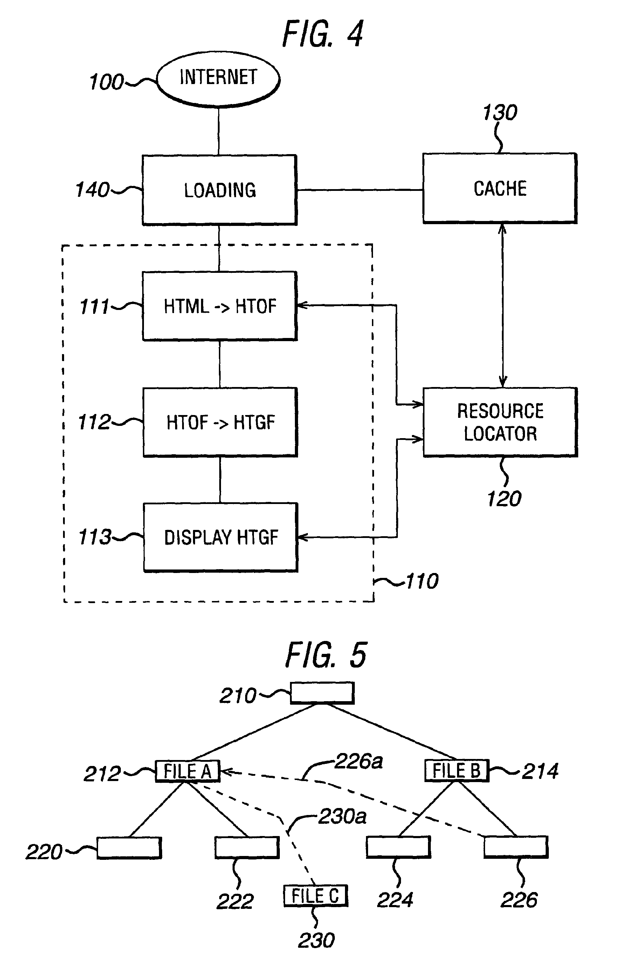

In this embodiment, a page encoded in HTML is rendered in a process carried out in three main steps, shown in the box 110 in Figure 4:
1. Extraction from the HTML code information relating to graphical objects to be displayed and their physical characteristics (step 111). This step creates a collection of object structures in a format that will be referred to as Hypertext Object Format ("HTOF").
2. Construction of graphical objects in a format that will be referred to as Hypertext Graphic Format ("HTGF") (step 112), which objects including data dependent upon dimensional and other physical constraints of the display.
3. Generating a display from the HTGF objects.

### Translation of HTML into HTOF and the structure of HTOF.

In this embodiment, as is typical, the rendering engine is a software program running on a platform, the platform having a processor, memory and other hardware.

HTML source code, for example from an Internet World Wide Web server, is received by a loading module of the rendering engine as a stream of bytes, which are processed by the rendering engine to display the page. In carrying out step 1 identified above (step 111 in Fig. 4), the rendering engine extracts from the HTML source the information necessary to reconstruct the page during steps 2 and 3 (steps 112 and 113 respectively in Fig. 4). Such information is contained within a plurality of object data structures in HTOF format. HTOF object data structures are structured to simplify their ability to be displayed in a displayed page, and to have a compact arrangement in memory.

HTOF object data structures are obtained as a stream of bytes during the execution of the step 2 identified above. More precisely, the HTOF object data structures are obtained while the HTML data is still being received. The HTOF object data structures obtained are delivered as a stream of bytes. The step 3 identified above may receive HTOF object data structures although the corresponding HTML page may not yet have been loaded in its entirety. This allows rendering of a display to start with minimum delay. This means that the HTML stream of bytes and the HTOF stream of bytes may be processed on the fly.

Graphical objects represented by HTOF object data structures fall into three categories: visible objects (for example, simple text, an image, a hyperlink or a form button); management objects (for example, an anchor or a form that contains a list of visible objects contained within the form); and formatting objects (for example, paragraph breaks or objects to indicate changes in alignment).

Accordingly, the HTML source fragment shown above is can be considered to include three independent text objects which belong to the category of visible objects, as follows:
Object 1:
   Text = "Italic text starts here"
   Style: Italic
Object 2
   Text = "and changes into bold-italic"
   Style: Bold Italic
Object 3
   Text = "and then continues as normal."
   Style: Normal

These three objects when encoded in HTOF format preserve the integrity of the data relating to the page present in the HTML code, but in a form that is more readily usable by the rendering engine.

In HTOF, character strings are encoded in a binary format, for example, ISO Latin 1. Therefore, a further processing step is carried out during translation to convert character strings encoded in HTML into binary characters. For example, the HTML string "&eacute" is converted to the character "é" prior to being stored in the text field of the HTOF data structure. Multiple space characters are also converted to appropriate space, tab or carriage return characters in accordance with the rules for proper rendering of HTML code.

The step of converting HTML to HTOF also has the effect of filtering the HTML byte stream. In general, it is recognised that an HTML rendering engine should ignore tags that do not represent properly formed tags in the version of HTML supported by the rendering engine. In this embodiment, only those tags and attributes that are properly formed tags in HTML as supported by the rendering engine are translated into HTOF. In particular, any tag or attribute that cannot be properly rendered in HTGF is not included in a corresponding HTOF structure. Thus, the HTOF data generated by step 1 can be converted into HTGF in step 2 with no redundancy in the HTOF data.

Following conversion of the HTML source to HTOF data, all information required to render the page is contained in the HTOF data so the HTML data is removed from the memory of the platform on which the rendering engine is running.

There now follows a detailed specification of a set of object data structures that together can be used to construct a HTOF representation of a page encoded in a subset of HTML. Data structures are represented in code in the C programming language.

### Basic Structures

In this embodiment, all HTOF object data structures have a common header corresponding to the following structure:

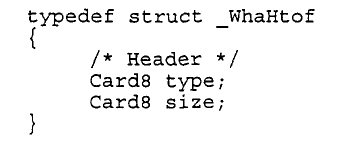

This header identifies the function of the HTOF data structure and specifies the size of the HTOF object data structure. One of a number of predefined numerical constants is assigned to the field "type" to indicate the type of the HTOF object. Below, the complete structure of each type of HTOF object data structure is shown.

**WbaHtofPoint:** This structure defines x and y co-ordinates of a geometrical point, and is used to define sensitive zones for HTML "MapArea" objects.

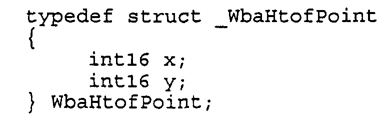

**WbaHtofString**: This structure defines a string of characters of variable length (limited to 255 bytes). The characters are encoded in a binary format, as discussed above. The first character of the string is obtained from the field "string", and the remaining characters are appended to the structure.

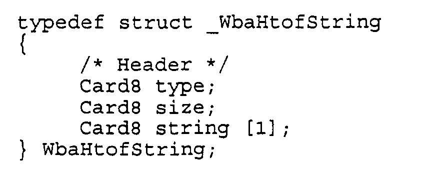

### Structures associated with HTML tags

**WbaHtofHeader:** This structure defines general parameters of a document encoded in HTOF. It is always the first object in such a document. It contains values that are defined in the "HEAD" section of an HTML document.

### Fields

- alinkColor: colour of a link when it has focus.
- bgColor: background colour, inoperative if NULL.
- linkColor: colour of an unvisited link.
- textColor: colour of normal text.
- vlinkColor: colour of a visited link.
- base: absolute base address to be applied to relative links.
- baseTarget: base target.
- title: title of the document.
- url: URL of the background image.

### Definition

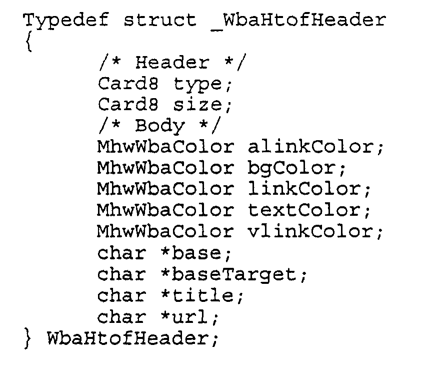

The "baseTarget" defined above signifies the name of the default target when a hyperlink is selected.

**WbaHtofMeta:** Attributes of the HTML "META" tag are represented by this structure.
Only automatic refreshing of documents is managed in HTOF.

Fields
- time: Time after which the document is to be refreshed.
- url: URL of the document to load.

### Definition

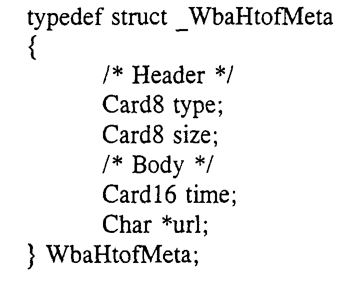

**WbaHtofMap:** This structure is associated with the "USEMAP" HTML tag. It permits the specification of the header that defines the sensitive zones for an image. The sensitive zones are always positioned in accordance with data contained within a WbaHtofMap structure.

### Fields

- nbArea: number of consecutive zone objects.
- name: name of the map.

### Definition

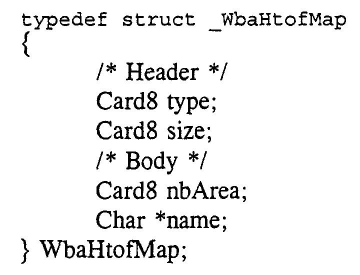

**WbaHtofArea:** This structure allows sensitive zones of a USEMAP image to be defined.

### Fields

- shape: shape of the zone. One of a predefined set of values specifying that the zone is a rectangle, a circle, or a polygon.
- nbPoints: number of points defining the zone.
- alt: Alternate text.
- url: Absolute name of the URL concerned.
- target: Target window for the URL.
- coords: Array of points defining the zone.

### Definition

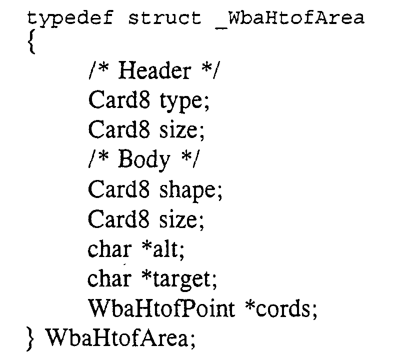

**WbaHtofAnchor:** This structure defines an anchor for directly accessing a part of an HTML page. It is associated with the "NAME" attribute of the "A" tag.

### Fields

- name: name of the anchor.

### Definition

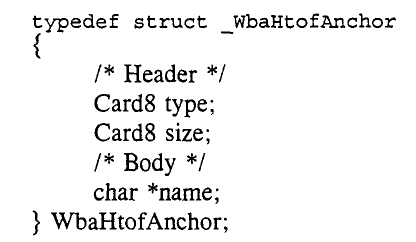

**WbaHtofJump:** This structure supports changes of the format of text (for example, changes of alignment, moving onto a new line). The structure is primarily associated with the HTML "P" tag.

### Fields

| bits | |
|---|---|
| bits.align:2 bits | specifies normal text; left, centre or right justification. |
| bits.newline:2 bits | specifies the rule for text starting on a new line. |
| bits.newpara:1 bit | the text starts a new paragraph. |
| bits.resetmargin:1 bit | suppression of the left margin. |

### Definition

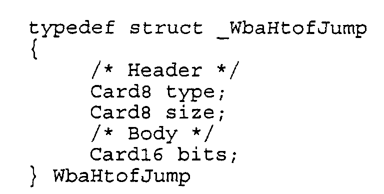

**WbaHtofText:** A block of simple text is defined by this structure. It permits specification of all attributes of text style, colour, and font.

### Fields

| bits | |
|---|---|
| bits.font:3 | height of the font. A number between 1 and 7. |
| bits.bold:1 | bold text. |
| bits.italic:1 | italic text. |
| bits.blink:1 | blinking text. |
| bits.underline:1 | underlined text. |
| bits.strike:1 | struck-through text. |
| bits.alignj:1 | justified alignment. |
| bits.courier:1 | text in courier font. |
| bits.subscript:3 | subscript text. |
| bits.superscript:3 | superscript text. |
| color: | reference to the local colourmap. |
| text: | address of the text string. |

### Definition

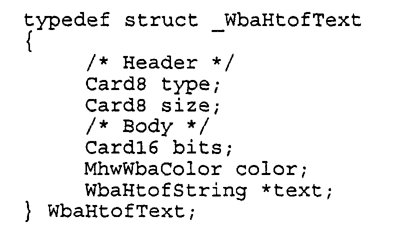

**WbaHtofHypertext:** This structure defines a piece of text associated with a hyperlink. It is associated with the HTML "A" tag.

### Fields

| bits | |
|---|---|
| bits.font:3 | height of the font. A number between 1 and 7. |
| bits.bold:1 | bold text. |
| bits.italic:1 | italic text. |
| bits.blink:1 | blinking text. |
| bits.underline:1 | underlined text. |
| bits.strike:1 | struck-through text. |
| bits.alignj:1 | justified alignment. |
| bits.courier:1 | text in courier font. |
| bits.subscript:3 | subscript text. |
| bits. superscript: 3 | superscript text. |
| color: | reference to the local colourmap. |
| text: | address of the text string. |
| url: | address of the hyperlink. |
| target: | target of the hyperlink. |

### Definition

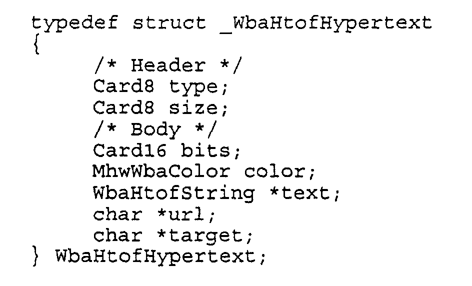

**WbaHtofImage:** This structure defines an image type object (associated with the HTML "IMG" tag. The image might be a simple image, an image associated with a hyperlink, or might be an image associated with a "ISMAP" or "USEMAP" tag.

### Fields

| bits | |
|---|---|
| bits.alignimg:3 | a value to specify the alignment of the image (bottom, left, right, top or middle). |
| bits.ismap:1 | indicates a clickable image without a sensitive zone. |
| border | specifies the thickness of the image border. |
| hspace | additional horizontal space. |
| vspace | additional vertical space. |
| h | height of the image (0 if undefined). |
| w | width of the image (0 if undefined). |
| alt | alternate text. |
| urlImage | URL of an image to load or NULL if the image is in error. |
| usemap | map of the image. |
| url | URL of the hyperlink.. |
| target | target of the hyperlink. |

### Definition

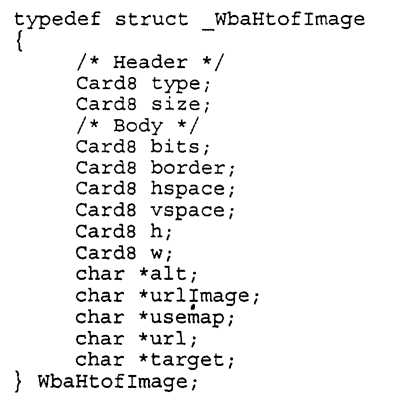

The pointer urlImage is set to value 0 if the image is in error.

**WbaHtofBullet:** This object defines list bullets and numbers. It is associated with the "UL" HTML tag.

### Fields:

| bits | |
|---|---|
| bits.font:3 | size of font between 1 and 7. |
| bits.bold:1 | bold text. |
| bits. italic:1 | italic text. |
| bits.blink:1 | blinking text. |
| bits.underline:1 | underlined text. |
| bits.strike:1 | struck-through text. |
| bits.icon:4 | a value to indicate the bullet style. |
| w | size of the tabulation in pixels. |
| value | current number for numbered lists. |
| color | text colour. |

### Definition:

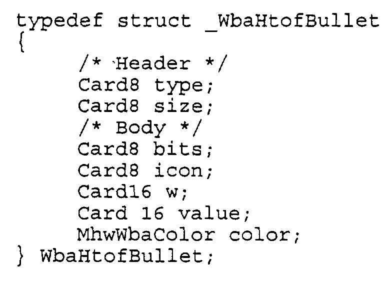

**WbaHtofSeparator:** A horizontal separator is defined by this structure. It is associated with the "HR" HTML tag.

### Fields

| bits | |
|---|---|
| bits.align:2 | a value to specify alignment as normal, left, right, centre or justified. |
| bits.noshade:1 | indicates no shadow effect. |
| bits.percent:1 | size is designated as a percentage. |
| h | thickness of the line in pixels. |
| w | size of the line, if 0 then maximum size. |
| foo | unused (necessary for alignment). |

### Definition

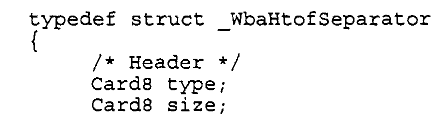

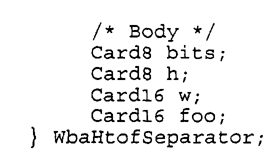

**WbaHtofForm:** Data necessary for execution of a data entry form. This structure is associated with the "FORM" HTML tag.

### Fields

- method: method of sending the request. Depending upon value, specifies POST or GET.
- url: URL to call upon submission of the form data.
- target: target to call upon submission of the form data.

### Definition

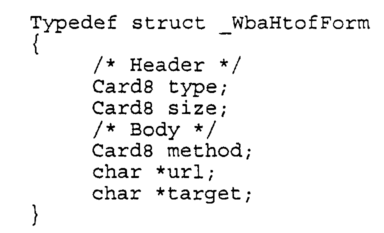

**WbaHtofInput:** Input field for a form object where the field is specified by a sub-type.

### Fields

| bits | |
|---|---|
| bits.alignimg:3 | a value to specify the alignment of the image (bottom, left, right, top or middle). |
| checked:1 | the field is a "yes" or a "no" value. |
| subType:4 | the type of the object. A value to specify a text box, a check box, a file object, a hidden object, a password input field, a radio button, a reset button, a submit button or a push button. |
| border | thickness of the border in pixels. |
| columns | number of characters displayed on the screen. |
| max | maximum length of text. |
| w | size of the image. |
| h | height of the image. |
| alt | alternate text. |
| name | name of the object. |
| url | URL of the image associated with the field. |
| value | default value of the field. |

### Definition

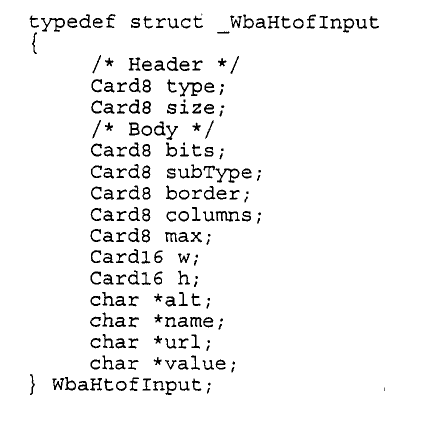

**WbaHtofList:** Form object representing a single or multiple selection list box.

### Fields

- multiple:1: indicates single or multiple selection.
- lines: number of visible lines.
- nbItem: number of fields in the list.
- name: name of the field.

### Definition

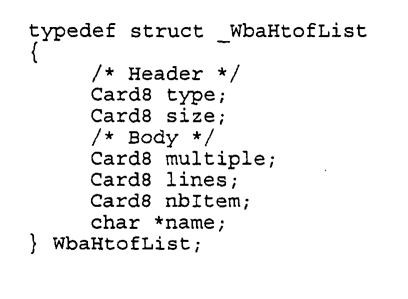

**WbaHtofListContent:** Form object representing a selection list.

### Fields

- checked:1: indicates whether the field is selected or not.
- text: entered text.
- value: entered value.

### Definition

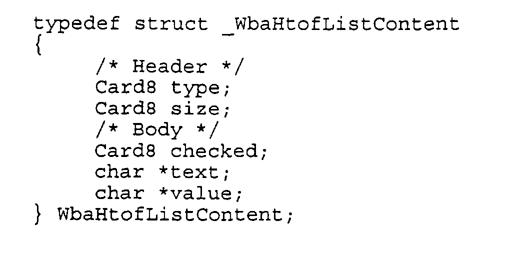

**WbaHtofTextarea:** Form object representing zone for text input.

### Fields

- columns: number of visible columns.
- lines: number of visible lines.
- name: entered text.
- value: entered value.

### Definition

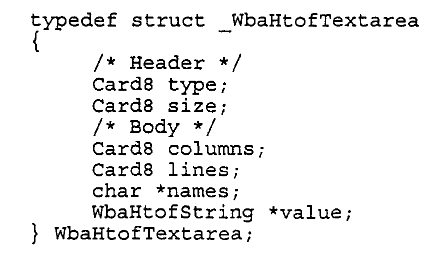

**WbaHtofApplet:** An object derived from a Java (RTM) applet.

### Fields

- alignimg:3: a value to specify the alignment of the image (bottom, left, right, top or middle).
- nbParam: number of elements in the array "param".
- hspace: additional horizontal space.
- vspace: additional vertical space.
- h: height of the image (0 if undefined).
- w: width of the image (0 if undefined).
- name: name of the applet for JAVA.
- alt: alternate text to display.
- codebase: base of the applet.
- code: name of file containing the applet.

### Definition

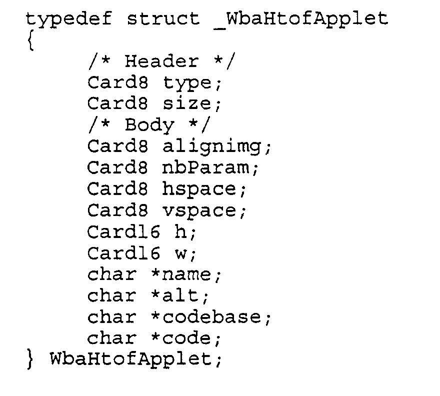

**WbaHtofAppletParam:** A parameter for a Java applet.

### Fields:

- name: name of the parameter.
- value: value of the parameter.

### Definition

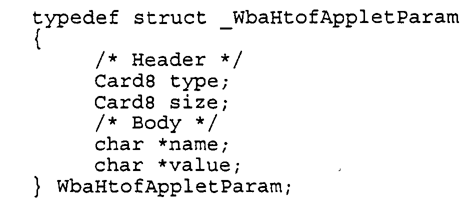

**WbaHtofCell**: Object to describe the borders of a cell.

### Fields

- align:2: value to specify alignment of a line as being left aligned, right aligned, centred or justified.
- valign:2: value to specify vertical alignment of a line as being aligned to the top, the middle or the bottom.
- noWrap:1: specifies that the text in the cell should not be split over more than one line.
- percent:1: indicates that the size is expressed as a percentage.
- premcell:1: indicates that the cell is the first cell on a line.
- useBgColor:1: the field "bgColor" is valid.
- colSpan: the cell extends over several columns.
- rowSpan: the cell extends over several rows.
- h: the height of the cell.
- w: the width of the cell.
- bgColor: a colour reference to a colourmap.
- cell: the address of the following cell.

### Definition

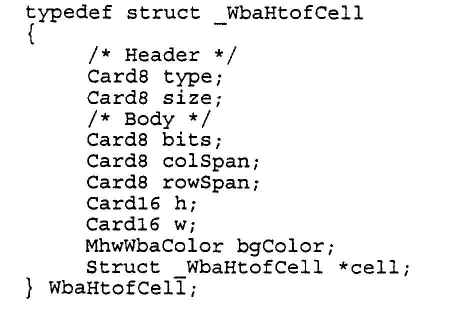

**WbaHtofTable:** Control object for a table.

### Fields

| bits | |
|---|---|
| align:2 | value to specify alignment of a line as being left aligned, right aligned, centred or justified. |
| valign:2 | value to specify vertical alignment of a line as being aligned to the top, the middle or the bottom. |
| alignc:1 | alignment of the caption. |
| percent:1 | indicates that the size is expressed as a percentage. |
| premcell:1 | indicates that the cell is the first cell on a line. |
| useBgColor:1 | the field "bgColor" is valid. |
| border | cell border thickness. |
| cellspacing | space in pixels between adjacent cells. |
| cellpadding | space in pixels between the cell's border and its contents. |
| w | the width of the table. |
| bgColor | a colour reference to a colourmap. |
| caption | address of the memory in which the caption is stored. |
| cell | the address of the following cell. |

### Definition

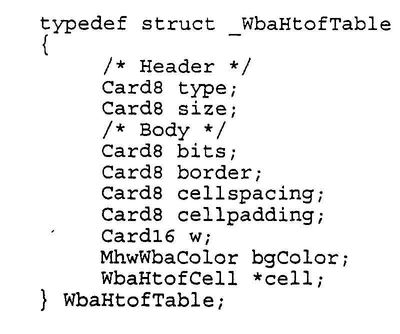

**WbaHtofFrameset**: Object for description of a group of windows in a frameset.

### Fields

- cols: array describing columns.
- rows: array describing rows.

### Definition:

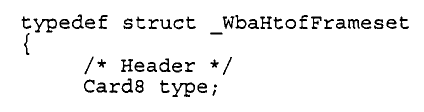

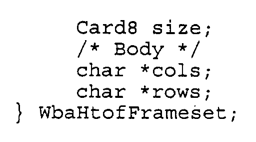

**WbaHtofFrame**: Object for description of window within a frameset.

### Fields

| bits | |
|---|---|
| scrolling:2 | set to a value to indicate whether scrolling is prohibited, that scrollbars will be provided automatically as needed, or that horizontal and/or vertical scrollbars will be provided. |
| noresize: 1 | set to indicate that the window may not be resized by a user. |
| marginWidth | the width of the margin in pixels. |
| marginHeight | the height of the margin in pixels. |
| name | name of the window. |
| url | height of the window. |

### Definition

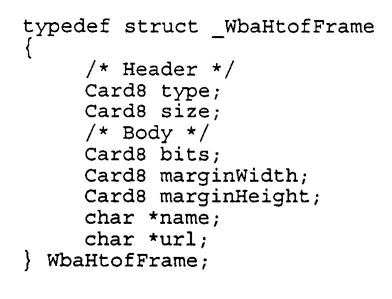

### Addressing schemes for HTOF objects

The above-described HTOF and HTGF format can exist in two forms. In a first form, pointer fields within the HTOF structures represent absolute pointer values to a location in memory. In an alternative format, the pointer values contain a byte-offset value from the start of the HTOF document. The latter form has the advantage that the object data encoded in HTOF can be relocated in memory without having to make any amendment to the data. In particular, the data may be created on a first platform and then transmitted to a remote platform for use without knowledge of the memory location at which the data will be stored on the remote platform.

HTGF objects may use similar addressing schemes.

### Display of visual objects represented by HTOF object structures

As will be understood, the HTOF object data contains all of the relevant information included in the HTML source. However, it does not of itself contain sufficient information to directly render the page. In particular, HTOF data does not specify the position of any graphical object on a display screen.

In this embodiment, the HTOF data is subject to a further processing step in the display stage in which it is translated into a format that includes additional information required in the display step. In this embodiment, the further processing step generates data in a format referred to as Hypertext Graphic Format ("HTGF").

In particular, HTGF objects include (in addition to all of the data from a corresponding HTOF object) data representing the size in pixels of a graphical object, its position on a screen display (as an offset from an origin point). Additionally, where the object includes an image, the references to the image are stored within the HTGF structure. The image data, i.e. the image itself, is stored in cache memory. The position and size is dependent upon the dimensions of a particular display upon which the page is to be rendered.

A set of HTGF objects thus contains data and references to data required for rendering on a display with a minimum of further processing.

As mentioned above, HTOF object data structures may be obtained as a stream of bytes. This stream of bytes may be processed on the fly to obtain the corresponding HTGF structures, also in form of a stream of bytes. Thus HTGF structures are also obtained on the fly.

### Memory Management

Memory is managed by use of a cache memory.

The cache memory 130 is a data base for storing pages in HTML, HTOF and HTGF format. It thus allows storage of all pages downloaded from the network (INTERNET) 100 by loading module 140 and those created by processing into HTOF and HTGF format.

The cache memory 130 is located in Random Access Memory and has a determined limited size. The cache memory 130 regularly deletes old pages to gain storage space. The deletion of old pages is done automatically and according to criteria such as for example an expiry date of the page, its last use date or its priority parameter.

As has been described above, HTML code is received in a byte stream and translated into object data in HTOF format, and HTML code can then be discarded once it is no longer required. This gives rise to a demand for a constantly increasing pool of memory in which to store HTOF data and a variable demand for a pool of memory in which to store HTML code. In this embodiment, the memory for both HTML and HTOF code is stored in a cache memory.

### Referemce to a URL

A URL (universal resources locator) may be referenced in either one of HTOF or HTGF objects.

A reference to a URL may be activated by a client. The client may be either a user, e.g. by clicking on a visible hyperlink displayed on a screen, or an application such as the application for rendering a display from HTGF data or the application for processing HTOF data into HTGF data.

The format of a page referenced by a URL may be specific to the client which activates it. There may be a plurality of pages in difference formats which correspond to a single URL-reference. For example, a single URL-reference may be associated to pages in HTML, HTOF and/or HTGF-format.

When a client activates a URL-reference, a resource locator 120 checks if a page corresponding to the activated URL-reference is available in cache memory 130 in a specific format adapted to the client. If the corresponding page is available it is retrieved from cache memory 130. Else a request to the application which delivers the specific required format is issued.

An example of a URL-reference in the form of a HTGF oject will now be given. This URL-reference may be a hyperlink displayed on the screen and which is activated by a click of the user on the displayed hyperlink. The application for rendering a display from HTGF data uses the resource locator to check if a page in HTGF format corresponding to the activated URL-reference is available in cache memory 130. If this is the case, the page is extracted from cache memory 130 and displayed on the screen.

If the page is not available in HTGF format, then a request is issued to the application for processing HTOF data into HTGF data. The latter application uses the resource locator 120 to check if a page in HTOF format corresponding to the activated URL-reference is available in cache memory 130. If this is the case, the application extracts the page from cache memory and processes it into HTGF format before transferring it to the application for rendering a display from HTGF format.

If the page is not available in HTOF format, then a request is issued to the application which processes HTML data into HTOF data. The latter application uses the resource locator 120 to check if a page in HTML format corresponding to the activated URL-reference is available in cache memory. If this is the case, the application extracts the HTML-page from cache memory and processes it into HTOF format before transferring it for further processing to the application for processing HTOF data into HTGF data. The application for rendering a display from HTGF data eventually processes the HTGF data for display.

If the HTML-page is not available in cache memory 130 the page is downloaded from the network 100 by loading module 140 and subsequently processed to be displayed on the screen.

### References in a hyperlink and within a frameset

Many pages encoded in a mark-up language include one or more hyperlinks. These are visible graphical objects that can be activated by a user (typically by clicking on the object using an input device such as a mouse). The hyperlink includes a reference to a page, or a specific location within a page. Upon activation of the hyperlink, the referred page is displayed, and (if applicable) the referenced location is displayed.

Figure 5 illustrates one possible layout of an HTML frameset. A frame page 210 includes URL-references of a plurality of frames (in this case two), each of which refers to a further page 212, 214. These URL-references are activated by the application for rendering a display from HTGF data such that corresponding pages in HTGF format are requested from the resource locator in a manner similar to that described in the previous section "References to a URL". Within each further page 212,214 is one or more references 220 ... 226 to other pages. Such a reference may be a hyperlink 226a, 230a that causes another page to be substituted in the frame.

It will be understood that the embodiment of the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of rendering data encoded in a mark-up language source comprising translating the mark-up language source into object format data and rendering a display of the object format data.

2. A method according to claim 1 in which the object format data is binary encoded data.

3. A method according to claim 1 or claim 2 in which the object format data relating to each graphical object of the source data is represented in an object data structure, wherein each object data structure contains data sufficient to display the corresponding graphical object without reference to other object data structures.

4. A method according to claim 3 in which during the step of rendering a display some or all object data structures, other than the one being processed at a given time, are consigned to a subsidiary store, such as a paging file.

5. A method according to any preceding claim in which the mark-up language source is encoded in accordance with a coding specification, object format data being generated only in respect of source code that is in accordance with the coding specification.

6. A method of rendering data encoded in a mark-up language source according to any preceding claim in which mark-up language source is removed from memory following conversion to an object format.

7. A method according to any preceding claim in which the object format data includes a plurality of binary objects at least some of which correspond to a tag in the mark-up language source.

8. A method according to any preceding claim in which the object format data is translated into a second object format prior to the step of rendering a display.

9. A method according to claim 8 in which the second object format contains data relating to rendering a graphical object on a specific display.

10. A method according to claim 9 in which the second object format contains data relating to the position and/or the size and/or a binary representation of a graphical object on a display.

11. A method of distributing data encoded in a mark-up language source comprising converting the source data into data in an object format, storing the object format data at a data repository, distributing the object format data from the data repository to a remote location over a data link, and displaying a representation of the data at the remote location.

12. A method according to any preceding claim in which the mark-up language is hypertext mark-up language.

13. A method in accordance with any preceding claim in which the data to be displayed includes a hyperlink that refers to further data, wherein, if available, the further data is supplied as previously translated object format data in response to activation of the hyperlink.

14. A method of distributing data encoded in mark-up source on a remote client comprising retrieving the source data from a server, converting the source data into data in an object format and storing the object format data at a net proxy, distributing the object format data from the net proxy to a remote location over a data link, and displaying a representation of the data at the remote location.

15. A method according to Claim 11 or Claim 14, wherein converting the source data into data in an object format comprises converting the source data into first object format data and translating the first object format data into second object format data and wherein storing the object format data comprises storing the first object format data or the second object format data.

16. A method according to Claim 15, wherein both first object format and second object format data are stored.

17. A method according to any preceding claim wherein the mark up language source is received as a data stream and wherein a portion of the source data is translated or converted into object format data while further source data is being received.

18. A method according to Claim 17 as dependent on Claim 8 or 15, wherein data is translated into said second object format while source data is being received or translated or converted.

19. A method according to any preceding claim in which the mark-up language source and the object format data are stored in cache memory.

20. A method of managing memory in a receiver/decoder comprising allocating first memory for received mark-up language source code data and allocating second memory for object format data translated from the mark-up language source, wherein mark-up language source code data is deleted from said first memory following translation.

21. A method according to Claim 20, wherein both said first memory and said second memory comprise cache memory located in RAM.

22. A method of providing object format data in response to activation of a hyperlink comprising checking whether translated object format data corresponding to the hyperlink is stored and, if so, providing said corresponding object format data or, if not, translating source format data corresponding to the hyperlink.

23. A system for rendering data encoded in a mark-up language source comprising a translator which operates to translate the mark-up language source into data in an object format and display apparatus which operates to display the object format data, the system preferably comprising a receiver/decoder for digital television signals.

24. A frame page encoded in object format data translated from a mark-up language source comprising code to define a frameset, which code includes a reference to a page to be displayed in a frame of the frameset, in which the reference comprises a hyperlink which may reference object format data or mark-up language source.

25. A receiver/decoder for digital television signals arranged to perform a method according to any one of claims 1 to 22.
